# EUROPEAN PATENT APPLICATION

(11) **EP 4 657 603 A1**
(43) Date of publication of application: **03.12.2025**
(21) Application number: 25169352.9
(22) Date of filing: 09.04.2025
(51) Int. Cl.: H01M 10/48, B60L 50/64, H01M 10/613, H01M 10/625, H01M 10/6556, H01M 50/209, H01M 50/249, H01M 50/342, H01M 50/367

(54) **POWER STORAGE DEVICE**

(30) Priority: 28.05.2024 JP 2024086427
(71) Applicant: TOYOTA JIDOSHA KABUSHIKI KAISHA, Toyota-shi, Aichi-ken, 471-8571 (JP)
(72) Inventor: INOUE, Shigeyuki, Toyota-shi, Aichi-ken, 471-8571 (JP); SUGIE, Kazuki, Toyota-shi, Aichi-ken, 471-8571 (JP); KUMAZAWA, Kazuya, Toyota-shi, Aichi-ken, 471-8571 (JP); KAWAMOTO, Naoya, Toyota-shi, Aichi-ken, 471-8571 (JP)
(74) Representative: TBK

(57) **Abstract**

A power storage device (100) includes a plurality of power storage cells (10), a housing (30), a smoke exhaust sensor (50), and a detection space formation member (40) that forms a detection space (S2) in which gas is detected by the smoke exhaust sensor (50). The housing (30) includes a lower case (31), and a share panel (33) that forms a smoke exhaust space (S1) between a bottom plate (31c) of the lower case (31) and the share panel (33). The detection space formation member (40) is provided to form a detection space (S2) between the bottom plate (31c) and the plurality of power storage cells (10) and to cause the detection space (S2) to be separated from the smoke exhaust space (S1).

## Description

### CROSS REFERENCE TO RELATED APPLICATIONS

This nonprovisional application is based on Japanese Patent Application No. 2024-086427 filed on May 28, 2024 with the Japan Patent Office, the entire contents of which are hereby incorporated by reference.

### BACKGROUND

### Field

The present disclosure relates to a power storage device.

### Description of the Background Art

Japanese National Patent Publication No. 2022-525014 discloses a power battery pack mounted in a battery electric vehicle. The power battery pack includes a plurality of cells. Each of the plurality of cells is provided with an explosion-proof valve for discharging the smoke or gas inside the cell.

### SUMMARY

Although not described in Japanese National Patent Publication No. 2022-525014 above, the smoke or gas may be discharged from the lower surface of the cell (power storage cell) by the explosion-proof valve (safety valve) provided on the lower surface of the cell. In this configuration, a smoke exhaust space (smoke exhaust path) is formed below the cell. It is conceivable to dispose a smoke exhaust sensor (detection sensor) that detects gas (smoke) in the smoke exhaust space. In this case, the smoke exhaust sensor needs to be waterproofed in order to suppress an influence of water on the smoke exhaust sensor in the event of, for example, intrusion of water.

The present disclosure has been made to solve the problem described above. An object of the present disclosure is to provide a power storage device in which a waterproof treatment to a detection sensor that detects gas discharged downward from a power storage cell can be omitted.

A power storage device according to an aspect of the present disclosure includes: at least one power storage cell including a lower surface on which a safety valve is provided; a housing that accommodates the at least one power storage cell; a detection sensor that detects gas discharged from the at least one power storage cell; and a detection space formation member that forms a detection space in which the gas is detected by the detection sensor. The housing includes a lower case disposed to cover the at least one power storage cell from below and including a bottom portion having a through hole positioned to overlap the safety valve, and a share panel disposed below the lower case and forming a smoke exhaust space between the bottom portion of the lower case and the share panel. The detection space formation member is provided to form the detection space between the bottom portion of the lower case and the at least one power storage cell and to cause the detection space to be separated from the smoke exhaust space.

In the power storage device according to the aspect of the present disclosure, the detection space formation member is provided to form the detection space between the bottom portion of the lower case and the at least one power storage cell and to cause the detection space to be separated from the smoke exhaust space, as described above. This can suppress intrusion of water into the detection space separated from the smoke exhaust space even when water enters the smoke exhaust space. As a result, an influence of water exerted on the detection sensor that detects gas in the detection space can be suppressed. Consequently, waterproofing of the detection sensor can be omitted.

The at least one power storage cell may include a plurality of power storage cells arranged in an arrangement direction. The detection space formation member may extend in the arrangement direction along the plurality of power storage cells. With such a configuration, gas discharged from each of the plurality of power storage cells can be easily flowed into the detection space.

The power storage device may further include a waterproof seal that closes a through hole formed in the bottom portion of the lower case. Such a configuration can suppress intrusion of water from the smoke exhaust space into the detection space through the through hole.

The detection space formation member may be formed to be deformable from a reference shape to an inflated shape in which the detection space formation member is inflated downward relative to the reference shape, along with a pressures rise in the detection space. With such a configuration, the height of the detection space formation member of the reference shape in the upward-downward direction can be made smaller than the height of the detection space formation member of the inflated shape in the upward-downward direction. This can lead to a relatively small height (reference height) of the power storage device in the reference shape in which no (or little) gas is discharged from the power storage cell.

In the detection space formation member in the reference shape, a first part and a second part may be formed, the first part being positioned to face the safety valve of the at least one power storage cell, the second part being disposed adjacent to the first part in an intersecting direction intersecting an upward-downward direction and formed to be recessed downward from the first part. Such a configuration can lead to a stronger influence of the pressure of gas on the first part than when the distance between the first part and the safety valve is equal to the distance between the second part and the safety valve, because the first part is disposed relatively closer to the safety valve than the second part is to the safety valve. As a result, the first part can be pressed downward easily by the pressure of gas, thus easily inflating the detection space formation member downward.

The power storage device may further include a waterproof seal member disposed to surround the through hole between the bottom portion of the lower case and the detection space formation member. Such a configuration can further suppress intrusion of water from the smoke exhaust space into the detection space through the through hole.

The power storage device may include a heat-resistant plate disposed at a part of the share panel, the part facing the through hole formed in the bottom portion of the lower case. Such a configuration can suppress scattering (adhering) of a blast (spark), which has been released from the safety valve and has passed through the through hole, to the share panel.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 schematically shows a vehicle including a power storage device according to an embodiment.
Fig. 2 is a perspective view of the power storage device and a vehicle body according to the embodiment.
Fig. 3 is a sectional view taken along the line III-III in Fig. 2.
Fig. 4 is a perspective view showing a configuration of a power storage cell.
Fig. 5 is a perspective view showing a configuration of a lower case of the power storage device.
Fig. 6 is a perspective view showing a configuration of the lower case with a bracket unit attached thereto.
Fig. 7 is an exploded perspective view showing configurations of the lower case and a cooler.
Fig. 8 is an exploded perspective view showing configurations of the lower case and an inner path defining portion.
Fig. 9 is an exploded perspective view showing configurations of the lower case, a collection unit, and a share panel.
Fig. 10 is a plan view of the lower case seen from below.
Fig. 11 is a sectional view taken along the line XI-XI in Fig. 10.
Fig. 12 is a partially enlarged view of a detection space formation member of a reference shape.
Fig. 13 is a partially enlarged view of the detection space formation member of an inflated shape.
Fig. 14 is a partially enlarged view of the detection space formation member that is ruptured.
Fig. 15 is a partially enlarged view of a side collection portion and its vicinity in Fig. 11.

### DESCRIPTION OF THE PREFERRED EMBODIMENTS

An embodiment of the present disclosure will be described with reference to the drawings. In the drawings referred to below, the same or corresponding components have the same reference characters allotted.

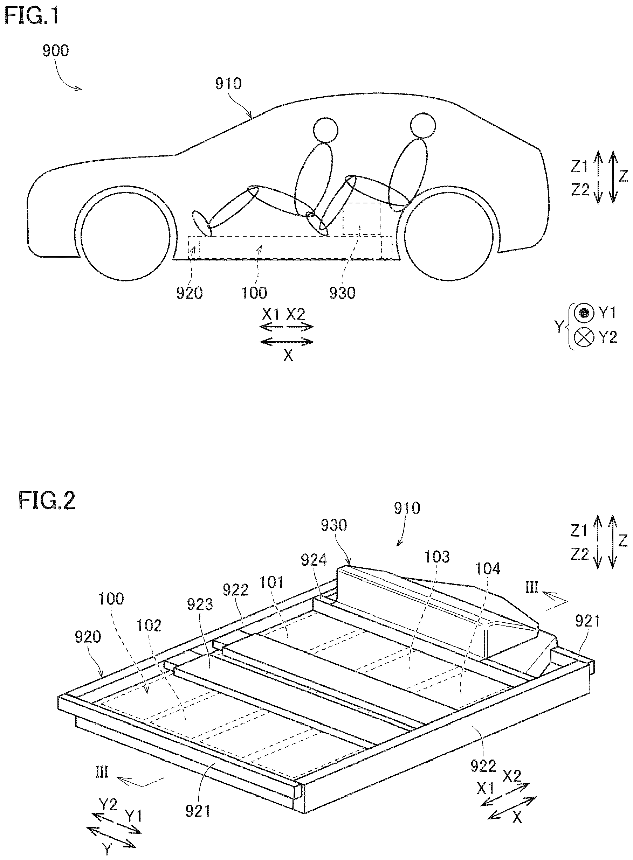

A power storage device 100 in an embodiment of the present disclosure will be described with reference to Figs. 1 to 15. Fig. 1 is a schematic side view of a vehicle 900 including power storage device 100 according to the present embodiment. In this specification, an X direction, a Y direction, and a Z direction are orthogonal to one another. For example, the X direction and the Y direction are the front-rear direction and the vehicle width direction of vehicle 900, respectively, when power storage device 100 is mounted in vehicle 900. An X1 direction and an X2 direction are the vehicle front side and the vehicle rear side, respectively. A Y1 direction and a Y2 direction are the vehicle left side and the vehicle right side, respectively. The Z direction is the upward-downward (vertical) direction. The X direction and the Y direction are examples of the "arrangement direction" and the "intersecting direction", respectively, in the present disclosure.

As shown in Fig. 1, vehicle 900 includes a vehicle body 910 and a device unit 930, in addition to power storage device 100. Examples of vehicle 900 include a hybrid electric vehicle, a plug-in hybrid electric vehicle, and a battery electric vehicle. Vehicle body 910 includes a frame member 920. Frame member 920 is disposed at the bottom of vehicle body 910.

As shown in Fig. 2, frame member 920 includes a pair of first frames 921, a pair of second frames 922, a first cross frame 923, and a second cross frame 924.

The pair of first frames 921 face each other in the X direction. Each first frame 921 is shaped to extend along the Y direction.

The pair of second frames 922 face each other in the Y direction. Each second frame 922 is shaped to extend along the X direction. The ends of each second frame 922 in the X direction are connected to first frames 921. The pair of second frames 922 form a frame in the shape of an approximately square prism that surrounds power storage device 100 together with the pair of first frames 921.

First cross frame 923 is disposed between the pair of first frames 921 and connects the pair of second frames 922 to each other.

Second cross frame 924 is disposed between the pair of first frames 921 and connects the pair of second frames 922 to each other. Second cross frame 924 is spaced apart from first cross frame 923 in the X direction. Each of first cross frame 923 and second cross frame 924 forms, for example, a seat cross.

Power storage device 100 is attached to frame member 920. Power storage device 100 is disposed below first cross frame 923 and second cross frame 924. Power storage device 100 includes four power storage stacks 101 to 104. The number of power storage stacks is not limited to four.

In the present embodiment, each of power storage stacks 101 to 104 is shaped into a rectangular parallelepiped elongated in the X direction. As shown in Fig. 2, the four power storage stacks 101 to 104 are disposed side by side along the Y direction.

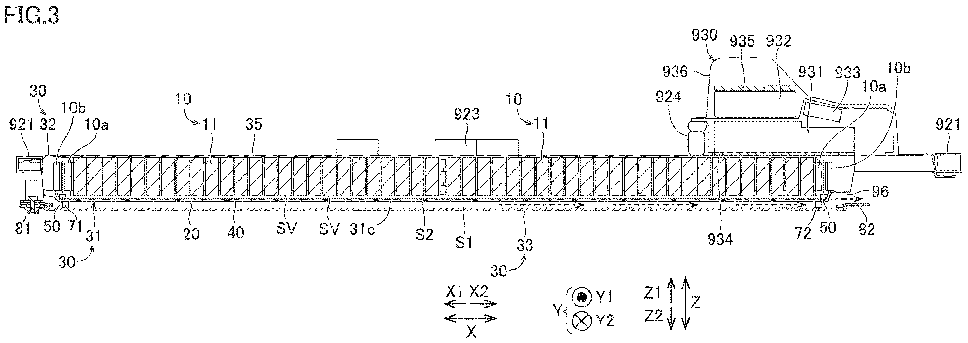

Fig. 3 is a sectional view taken along the line III-III in Fig. 2. As shown in Fig. 3, power storage device 100 includes a power storage cell 10, a cooler 20, a housing 30, and a reinforcing member 35. At least one power storage cell 10 is included in each of power storage stacks 101 to 104 (Fig. 2). In the present embodiment, in each of power storage stacks 101 to 104, a plurality of (e.g., 50) power storage cells 10 are arranged in the X direction. In Fig. 3, the direction of gas discharged from a safety valve SV (which will be described later) is indicated by the alternate long and short dash line arrows.

Each power storage cell 10 includes an electrode body 11. Electrode body 11 may be formed of a wound body of a positive electrode sheet and a negative electrode sheet wound with a separator in between, or may be formed of a stack of a positive electrode sheet and a negative electrode sheet stacked with a separator in between. Electrode body 11 is shaped to be long in the Y direction.

Cooler 20 cools power storage cells 10. In the present embodiment, cooler 20 cools each of power storage stacks 101 to 104. A cooling medium (e.g., oil) flows through cooler 20.

Housing 30 includes a lower case 31, an upper cover 32, and a share panel 33.

Upper cover 32 accommodates power storage cells 10, together with lower case 31. In the present embodiment, upper cover 32 accommodates four power storage stacks 101 to 104 (Fig. 2) in a hermetically sealed manner, together with lower case 31. Upper cover 32 is disposed to cover each of power storage stacks 101 to 104 from above. Lower case 31 is disposed to cover each of power storage stacks 101 to 104 from below. The peripheral edge of upper cover 32 is connected to the peripheral edge of lower case 31 with bolts or the like with a sealing member in between.

Share panel 33 is provided below lower case 31. Share panel 33 has the function of protecting lower case 31. Share panel 33 may be shaped into a flat plate.

A bottom plate 31c of lower case 31 and share panel 33 are located below power storage cells 10. In addition, a smoke exhaust space S1 is formed between bottom plate 31c and share panel 33. Smoke exhaust space S1 forms a smoke exhaust path through which gas or smoke (hereinafter simply referred to as "gas") discharged from power storage cell 10 flows. The gas in smoke exhaust space S1 is discharged from an opening 33c, which will be described later, to the outside. Bottom plate 31c is an example of the "bottom portion" in the present disclosure.

Power storage device 100 includes a smoke exhaust sensor 50 that detects gas discharged from each of power storage cells 10. Smoke exhaust sensor 50 is an example of the "detection sensor" in the present disclosure.

In a conventional power storage device, a smoke exhaust sensor is disposed in a smoke exhaust space, and thus, the smoke exhaust sensor needs to be waterproofed in order to suppress an influence of water on the smoke exhaust sensor in the event of, for example, intrusion of water.

In the present embodiment, power storage device 100 includes a detection space formation member 40 that forms a detection space S2 in which gas discharged from each of power storage cells 10 is detected. Detection space formation member 40 is disposed between bottom plate 31c of lower case 31 and power storage cells 10. Consequently, detection space S2 is formed between bottom plate 31c of lower case 31 and power storage cells 10. Detection space formation member 40 is provided such that detection space S2 is separated from smoke exhaust space S1. Detection space formation member 40 (detection space S2) is provided below each of power storage stacks (101 to 104).

Detection space formation member 40 is formed to be opened upward. Detection space formation member 40 is formed to extend in the X direction across power storage cells 10 arranged in the X direction. Power storage cells 10 are disposed such that a plurality of safety valves SV are arranged in the X direction. Detection space formation member 40 is provided to cover safety valves SV arranged in the X direction from below.

Power storage cells 10 are provided to cover the upper open end of detection space formation member 40. Consequently, detection space S2 is formed between power storage cells 10 and detection space formation member 40. Gas discharged downward (toward detection space S2) from power storage cell 10 flows into detection space S2 and also flows through detection space S2 in the X direction.

Smoke exhaust sensor 50 is provided in detection space S2. Thus, gas flowing through detection space S2 is detected by smoke exhaust sensor 50. Smoke exhaust sensor 50 is disposed at the end on each of the X1 side and the X2 side of detection space S2 (detection space formation member 40) in the X direction. Smoke exhaust sensor 50 may be attached to the inner surface (the surface on the detection space S2 side) of detection space formation member 40.

Smoke exhaust sensor 50 is provided in each detection space S2. This allows discharged smoke to be detected individually for power storage stacks 101 to 104 using smoke exhaust sensor 50.

Detection space formation member 40 is made of a material that ruptures by heat. For example, detection space formation member 40 is made of a thin metal film. Thus, as the temperature of detection space formation member 40 is increased during flowing of gas through detection space S2, detection space formation member 40 ruptures. As a result, the gas flowing through detection space S2 flows into smoke exhaust space S1 from the ruptured portion of detection space formation member 40. This allows gas to flow from detection space S2 to smoke exhaust space S1 along with rupture of detection space formation member 40 after gas is detected by smoke exhaust sensor 50 within a certain period of time from discharge of gas from power storage cell 10.

On the opposite sides of power storage cells 10 in the X direction, a pair of end plates 10a are provided that sandwich power storage cells 10 from the opposite sides in the X direction. A monitoring unit (smart battery management) 10b is disposed outside each end plate 10a in the X direction.

Device unit 930 is located at, for example, an end in the X direction. In the present embodiment, device unit 930 is disposed in the rear of upper cover 32 in the front-rear direction of vehicle 900. Device unit 930 has a junction box 931, an electricity supply unit 932, an electronic control unit 933, a first cooler 934, a second cooler 935, and a device cover 936.

Junction box 931 is disposed above upper cover 32. Junction box 931 accommodates a relay, a fuse, and the like. Junction box 931 is cooled by first cooler 934 disposed between junction box 931 and upper cover 32.

Electricity supply unit 932 is disposed above junction box 931. Electricity supply unit 932 is cooled by second cooler 935 disposed on electricity supply unit 932. Electronic control unit 933 is disposed above junction box 931.

Device cover 936 accommodates junction box 931, electricity supply unit 932, electronic control unit 933, and second cooler 935.

Reinforcing member 35 is disposed on upper cover 32. Reinforcing member 35 has the function of distributing a load exerted on power storage device 100 locally from above by an occupant of vehicle 900.

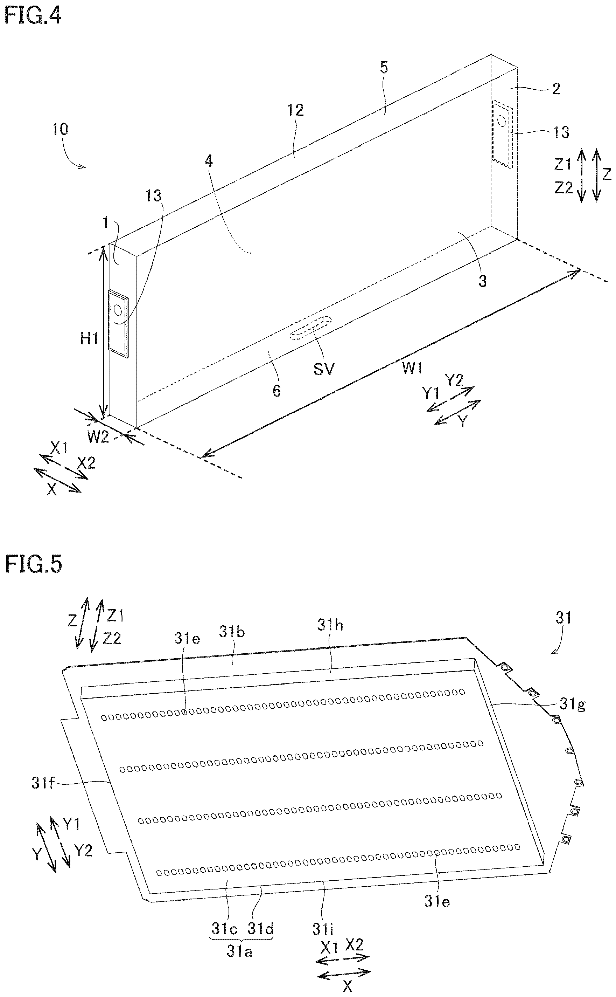

Fig. 4 is a perspective view showing a configuration of power storage cell 10. As shown in Fig. 4, each power storage cell 10 has a cell case 12, a pair of external terminals 13, and safety valve SV. Cell case 12 accommodates electrode body 11 (Fig. 3).

Cell case 12 is shaped into a rectangular parallelepiped. Cell case 12 is made of a metal such as aluminum. Power storage cell 10 is formed to be elongated in the Y direction. Specifically, a width W1 of power storage cell 10 in the Y direction is greater than a width W2 of power storage cell 10 in the X direction. A height H1 of power storage cell 10 is smaller than width W1 and greater than width W2.

Power storage cell 10 (cell case 12) has a short side surface 1, a short side surface 2, a long side surface 3, a long side surface 4, an upper surface 5, and a lower surface 6.

Short side surface 1 and short side surface 2 are arranged in the Y direction. Specifically, short side surface 1 and short side surface 2 are one end face and the other end face, respectively, of power storage cell 10 in the Y direction.

Long side surface 3 and long side surface 4 are arranged in the X direction. Specifically, long side surface 3 and long side surface 4 are one end face and the other end face, respectively, of power storage cell 10 in the X direction.

Upper surface 5 and lower surface 6 are arranged in the Z direction. Specifically, upper surface 5 and lower surface 6 are a Z1-side end face and a Z2-side end face, respectively, of power storage cell 10.

The pair of external terminals 13 are respectively provided on short side surface 1 and short side surface 2. Safety valve SV is provided on lower surface 6. Safety valve SV opens when the pressure of the smoke or gas inside cell case 12 becomes more than or equal to a certain level. In other words, lower surface 6, on which safety valve SV is provided, forms a pressure release surface of cell case 12.

Fig. 5 is a perspective view showing a configuration of lower case 31. Lower case 31 includes an accommodation portion 31a and a plate portion 31b. Accommodation portion 31a includes bottom plate 31c and a peripheral wall 31d. Bottom plate 31c is shaped into a plate, and bottom plate 31c has a plurality of smoke exhaust holes 31e. Smoke exhaust holes 31e are arranged in the front-rear direction (X direction) of vehicle 900. In addition, a plurality of (in Fig. 5, four) rows of smoke exhaust holes 31e, which are arranged in the X direction, are arranged in the Y direction. The row of smoke exhaust holes 31e arranged in the X direction is formed below each of power storage stacks 101 to 104 (Fig. 2). Smoke exhaust hole 31e is an example of the "through hole" in the present disclosure.

Alternatively, instead of smoke exhaust holes 31e arranged in the X direction, an opening formed to be elongated in the X direction may be formed. In the opening as described above, with lower case 31 being fixed to upper cover 32, safety valve SV of each of power storage cells 10 is in communication with the opening. Configuring such an opening can facilitate alignment of the opening with safety valve SV.

Peripheral wall 31d is formed to extend upward from the outer peripheral edge of bottom plate 31c. Peripheral wall 31d is formed in an annular shape. Peripheral wall 31d includes a front wall 31f disposed on the front side (X1 side), a rear wall 31g disposed on the rear side (X2 side), a left wall 31h disposed on the left side (Y1 side), and a right wall 31i disposed on the right side (Y2 side). Accommodation portion 31a has an opening that opens upward. Plate portion 31b is formed to protrude horizontally from the opening edge of accommodation portion 31a.

Herein, power storage cells 10 are disposed in accommodation portion 31a. Safety valve SV (Fig. 4) of power storage cell 10 and smoke exhaust hole 31e are arranged in the Z direction, and safety valve SV is in communication with smoke exhaust hole 31e.

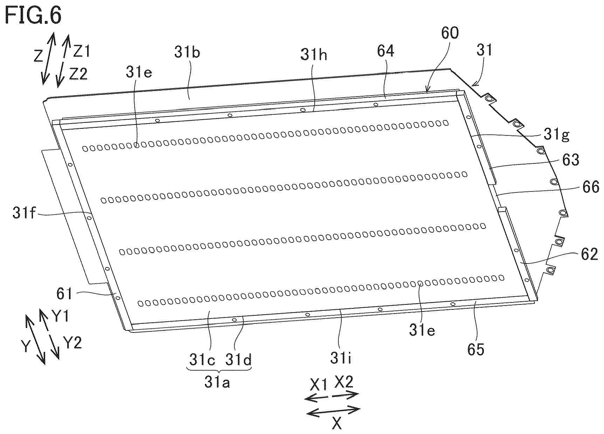

As shown in Fig. 6, power storage device 100 includes a bracket unit 60 provided on the outer peripheral surface of accommodation portion 31a. Bracket unit 60 is provided on the outer surface of peripheral wall 31d of lower case 31. Bracket unit 60 includes a front bracket 61, a rear bracket 62, a rear bracket 63, a side bracket 64, and a side bracket 65.

Front bracket 61 is fixed to the outer surface of front wall 31f of lower case 31. Each of rear bracket 62 and rear bracket 63 is provided on the outer surface of rear wall 31g. Rear bracket 62 is spaced apart from rear bracket 63 in the Y direction. A gap 66 is formed between rear bracket 62 and rear bracket 63. Gap 66 is located at the center of rear wall 31g in the Y direction.

Side bracket 64 is provided on the outer surface of left wall 31h. Side bracket 65 is provided on the outer surface of right wall 31i.

Bracket unit 60 is formed in an approximately annular shape, and has gap 66 formed on the rear side (X2 side) in the X direction.

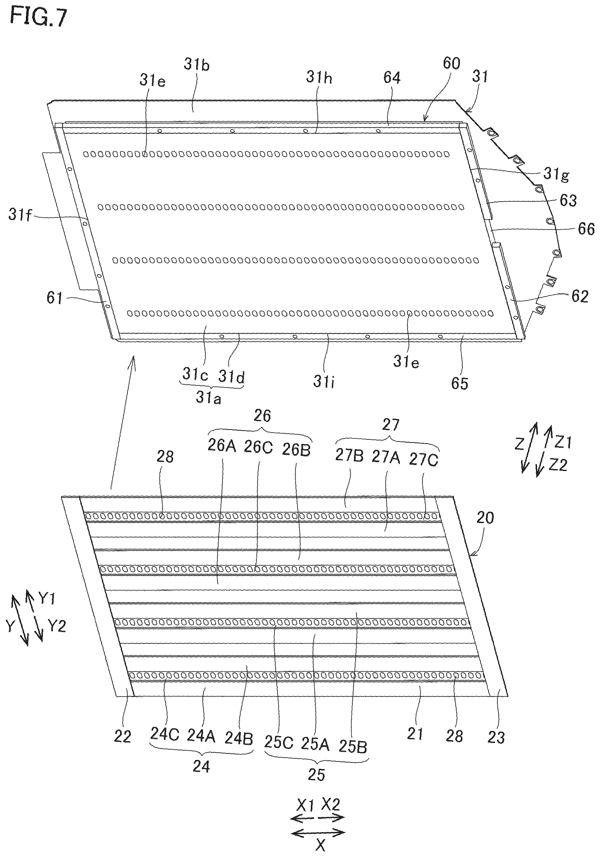

Fig. 7 is a perspective view of lower case 31, bracket unit 60, and cooler 20. Cooler 20 includes a cooling portion 21, a connection portion 22, and a connection portion 23.

Cooling portion 21 is formed to extend in the X direction. Connection portion 22 is provided at the front end (X1-side end) of cooling portion 21, and connection portion 23 is provided at the rear end (X2-side end) of cooling portion 21.

Connection portion 22 is connected with a supply pipe (not shown) and a discharge pipe (not shown). A cooling liquid is supplied from the supply pipe. The cooling liquid flows through cooling portion 21 and connection portion 22 and returns to connection portion 22. The cooling liquid that has returned to connection portion 22 is discharged from the exhaust pipe.

Power storage stacks 101 to 104 (Fig. 2) are disposed above cooling portion 21 with bottom plate 31c of lower case 31 in between. Cooling portion 21 includes a first cooling portion 24, a second cooling portion 25, a third cooling portion 26, and a fourth cooling portion 27. First cooling portion 24, second cooling portion 25, third cooling portion 26, and fourth cooling portion 27 are arranged in the stated order from the Y2 side (in the Y direction).

First cooling portion 24 has a flow portion 24A, a flow portion 24B, and a connecting plate 24C. Second cooling portion 25 has a flow portion 25A, a flow portion 25B, and a connecting plate 25C. Third cooling portion 26 has a flow portion 26A, a flow portion 26B, and a connecting plate 26C. Fourth cooling portion 27 has a flow portion 27A, a flow portion 27B, and a connecting plate 27C. First cooling portion 24, second cooling portion 25, third cooling portion 26, and fourth cooling portion 27 have the same configuration, and thus, only first cooling portion 24 will be described in detail as a representative example.

Flow portion 24A and flow portion 24B are spaced apart from each other in the Y direction. Each of flow portion 24A and flow portion 24B is formed to extend in the X direction.

Connecting plate 24C is disposed between flow portion 24A and flow portion 24B and is provided to connect flow portion 24A to flow portion 24B.

Connecting plate 24C has a plurality of holes 28. Holes 28 are spaced apart from each other in the X direction.

Holes 28 correspond respectively to smoke exhaust holes 31e formed in bottom plate 31c. With cooler 20 being fixed to lower case 31, holes 28 and smoke exhaust holes 31e are arranged in the Z direction.

Instead of holes 28 arranged in the X direction, an opening formed to be elongated in the X direction may be formed. In the opening as described above, with cooler 20 being fixed to lower case 31, smoke exhaust holes 31e formed in lower case 31 are in communication with the opening. Configuring such an opening can facilitate alignment of the opening with smoke exhaust holes 31e.

Cooler 20 is fixed to bottom plate 31c of lower case 31. Specifically, cooler 20 is fixed to bottom plate 31c with a thermally conductive adhesive (not shown in Fig. 7).

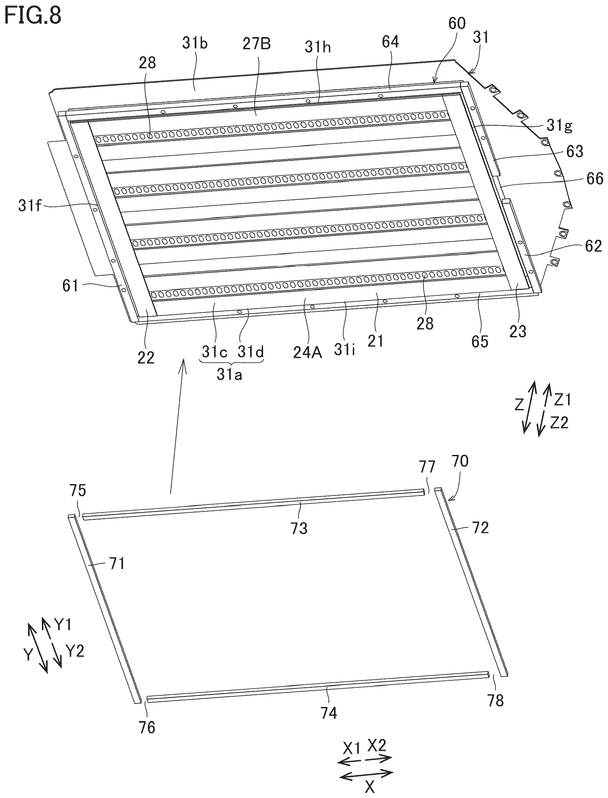

As shown in Fig. 8, power storage device 100 includes an inner path defining portion 70. Inner path defining portion 70 is disposed on the lower surface of cooler 20.

Inner path defining portion 70 is disposed in smoke exhaust space S1 (Fig. 3) between share panel 33 and bottom plate 31c of lower case 31, and is formed in an annular shape.

Inner path defining portion 70 includes a front side portion 71, a rear side portion 72, a left side portion 73, and a right side portion 74. Front side portion 71 and rear side portion 72 are spaced apart from each other in the X direction. Each of front side portion 71 and rear side portion 72 extends in the Y direction. Left side portion 73 and right side portion 74 are spaced apart from each other in the Y direction. Each of left side portion 73 and right side portion 74 extends in the X direction.

An opened portion 75 is formed between front side portion 71 and left side portion 73. An opened portion 76 is formed between front side portion 71 and right side portion 74. An opened portion 77 is formed between rear side portion 72 and left side portion 73. An opened portion 78 is formed between rear side portion 72 and right side portion 74.

Front side portion 71 is located on the front side (X1 side) of inner path defining portion 70. Front side portion 71 is disposed on the lower surface of connection portion 22 of cooler 20.

Rear side portion 72 is located on the rear side (X2 side) of inner path defining portion 70. Rear side portion 72 is disposed on the lower surface of connection portion 23 of cooler 20.

Left side portion 73 is disposed between the left end (Y1-side end) of front side portion 71 and the left end (Y2-side end) of rear side portion 72. Left side portion 73 is disposed in flow portion 27B.

Right side portion 74 is disposed between the right end (Y2-side end) of front side portion 71 and the right end (Y2-side end) of rear side portion 72. Right side portion 74 is disposed in flow portion 24A.

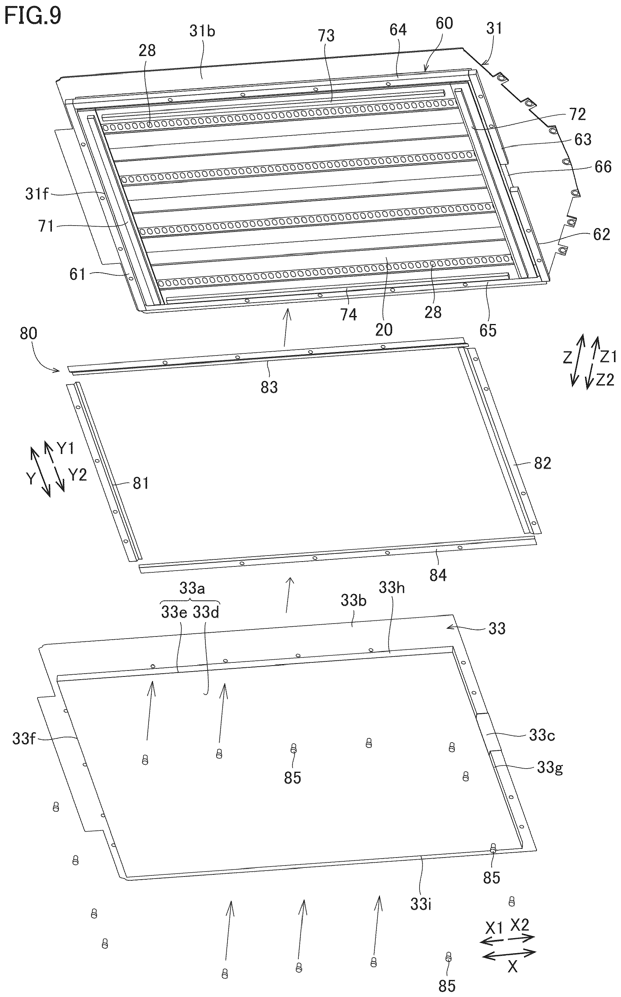

As shown in Fig. 9, power storage device 100 includes a collection unit 80. Collection unit 80 includes a front collection portion 81, a rear collection portion 82, a side collection portion 83, and a side collection portion 84.

Front collection portion 81 is fixed to front bracket 61 and is disposed adjacent to front side portion 71.

Rear collection portion 82 is fixed to each of rear brackets 62 and 63 and is disposed adjacent to rear side portion 72.

Side collection portion 83 is fixed to side bracket 64 and is disposed adjacent to left side portion 73. Side collection portion 84 is fixed to side bracket 65 and is disposed adjacent to right side portion 74.

Collection unit 80 is fixed annularly to bracket unit 60 formed in an annular shape with a plurality of bolts 85, together with share panel 33.

As describe above, share panel 33 is annularly fixed to bracket unit 60. This causes share panel 33 to annularly come into contact with bracket unit 60 or collection unit 80.

Share panel 33 includes a body 33a and a flange 33b formed on the outer peripheral edge of body 33a. Body 33a is formed to be recessed downward relative to flange 33b. Flange 33b is formed to extend horizontally from the edge of body 33a. In the example shown in Fig. 9, opening 33c is formed in body 33a. Opening 33c is formed in a portion of body 33a which is located on the rear side. Body 33a includes a bottom plate 33d and a peripheral wall 33e. Bottom plate 33d is located on the lower surface of share panel 33. Peripheral wall 33e is formed to stand upright from the outer peripheral edge of bottom plate 33d and connects bottom plate 33d to flange 33b. Peripheral wall 33e includes a front wall 33f located on the front side, a rear wall 33g located on the rear side, a left wall 33h, and a right wall 33i. Opening 33c is formed in rear wall 33g.

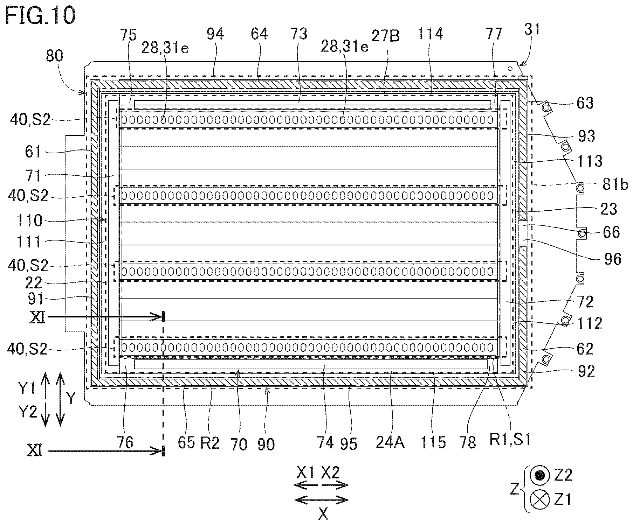

Fig. 10 is a bottom view showing cooler 20, bracket unit 60, and inner path defining portion 70. In Fig. 10, collection unit 80 is indicated by the broken line. In Fig. 10, a region R1 indicates the region of bottom plate 31c of lower case 31 in which smoke exhaust holes 31e (holes 28) are formed. A contact region R2 indicates the region in which collection portion 80 and bracket unit 60 come into contact with each other. In Fig. 10, contact region R2 is hatched for easy viewing. Contact region R2 is located outside inner path defining portion 70. Contact region R2 is formed to surround inner path defining portion 70.

In contact region R2, outer path defining portion 90 is formed as collection unit 80 comes into contact with bracket unit 60. In other words, outer path defining portion 90 is located outside inner path defining portion 70 (71 to 74) and is formed to surround inner path defining portion 70. Outer path defining portion 90 is a seal portion formed by fastening of collection portion 80 to bracket unit 60. This can prevent gas or the like from power storage cell 10 from leaking out of power storage device 100 through outer path defining portion 90.

Outer path defining portion 90 includes a front side portion 91, a rear side portion 92, a rear side portion 93, a lateral side portion 94, and a lateral side portion 95.

Front side portion 91 is located in front bracket 61. Rear side portion 92 and rear side portion 93 are located in rear bracket 62 and rear bracket 63, respectively. Similarly, lateral side portion 94 and lateral side portion 95 are located in side bracket 64 and side bracket 65, respectively.

An opened portion 96 is formed in outer path defining portion 90. Opened portion 96 is formed between rear side portion 92 and rear side portion 93. Opened portion 96 is provided at a position corresponding to gap 66 of bracket unit 60.

An exhaust passage 110 is formed between inner path defining portion 70 and outer path defining portion 90 configured as described above.

Exhaust passage 110 includes a front passage 111, a rear passage 112, a rear passage 113, a side passage 114, and a side passage 115.

Front passage 111 is located between front side portion 71 and front side portion 91. Rear passage 112 is located between rear side portion 72 and rear side portion 92. Rear passage 113 is located between rear side portion 72 and rear side portion 93. Side passage 114 is located between left side portion 73 and lateral side portion 94. Side passage 115 is located between right side portion 74 and lateral side portion 95.

With share panel 33 attached to lower case 31, smoke exhaust space S1 surrounded by inner path defining portion 70 is formed between share panel 33 and lower case 31. As shown in Fig. 10, region R1 and smoke exhaust space S1 overlap each other as lower case 31 and the like are viewed from below in plan view.

Exhaust passage 110 is in communication with smoke exhaust space S1 through opened portions 75, 76, 77, 78. Exhaust passage 110 is in communication with the outside through opened portion 96.

Detection space S2 (detection space formation member 40) extends in the X direction along smoke exhaust holes 31e (holes 28) arranged in the X direction.

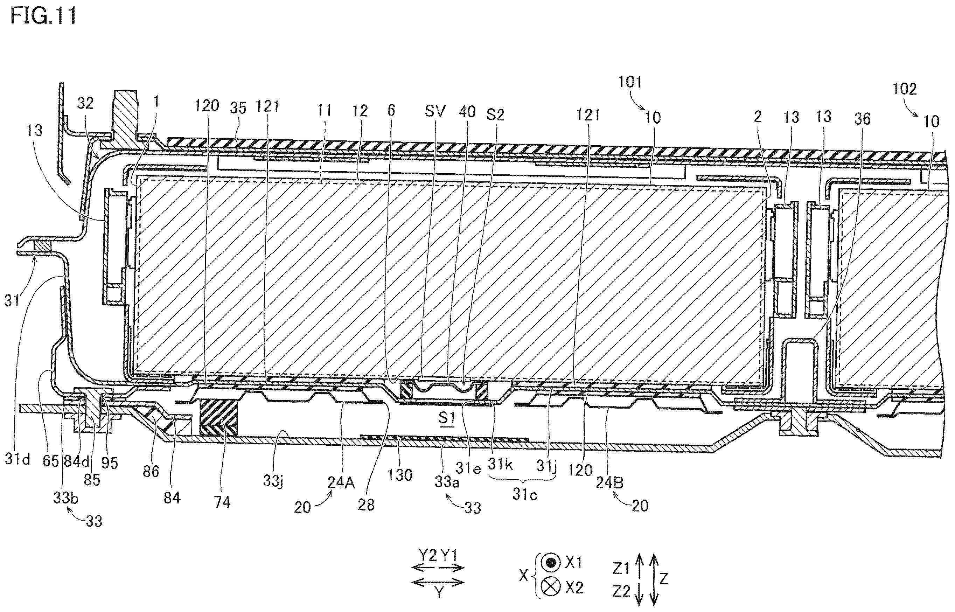

Fig. 11 is a sectional view taken along the line XI-XI in Fig. 10. In the cross section shown in Fig. 11, side collection portion 84 of collection unit 80 is shown.

Bottom plate 31c of lower case 31 includes a bottom body 31j on which power storage cell 10 is disposed, and a protrusion 31k. A plurality of protrusions 31k are spaced apart from each other in the Y direction. Each protrusion 31k is formed to extend in the X direction. Protrusion 31k is formed to protrude downward from bottom body 31j. The lower end of protrusion 31k is located in hole 28 formed in cooler 20. Smoke exhaust hole 31e is formed in the lower end of protrusion 31k.

A thermally conductive adhesive material 120 is provided between bottom body 31j and cooler 20. Thermally conductive adhesive material 120 bonds bottom body 31j to cooler 20. In addition, a thermally conductive adhesive material 121 is provided between bottom body 31j and lower surface 6 of power storage cell 10. Thermally conductive adhesive material 121 bonds bottom body 31j to power storage cell 10. Each of thermally conductive adhesive materials 120 and 121 extends along the X direction.

Power storage device 100 includes a heat-resistant plate 130. Heat-resistant plate 130 is disposed on a portion of share panel 33 which faces smoke exhaust hole 31e of lower case 31. Specifically, heat-resistant plate 130 is disposed on a portion of an upper surface 33j (a surface on the smoke exhaust space S1 side) of body 33a of share panel 33 which faces smoke exhaust hole 31e. Heat-resistant plate 130 extends in the X direction to cover smoke exhaust holes 31e (holes 28) arranged in the X direction from below. Heat-resistant plate 130 is made of, for example, mica obtained by solidifying a natural inorganic mineral through heat pressing.

Power storage device 100 includes a cross member 36. Cross member 36 is connected to a portion of bottom plate 31c of lower case 31 which is located between a pair of power storage stacks (between power storage stack 101 and power storage stack 102 in Fig. 11) adjacent to each other. Cross member 36 extends along the X direction. Cross member 36 is connected to peripheral wall 31d (Fig. 5). Cross member 36 may be connected to the pair of first frames 921 (Fig. 2) with a bracket (not shown) in between.

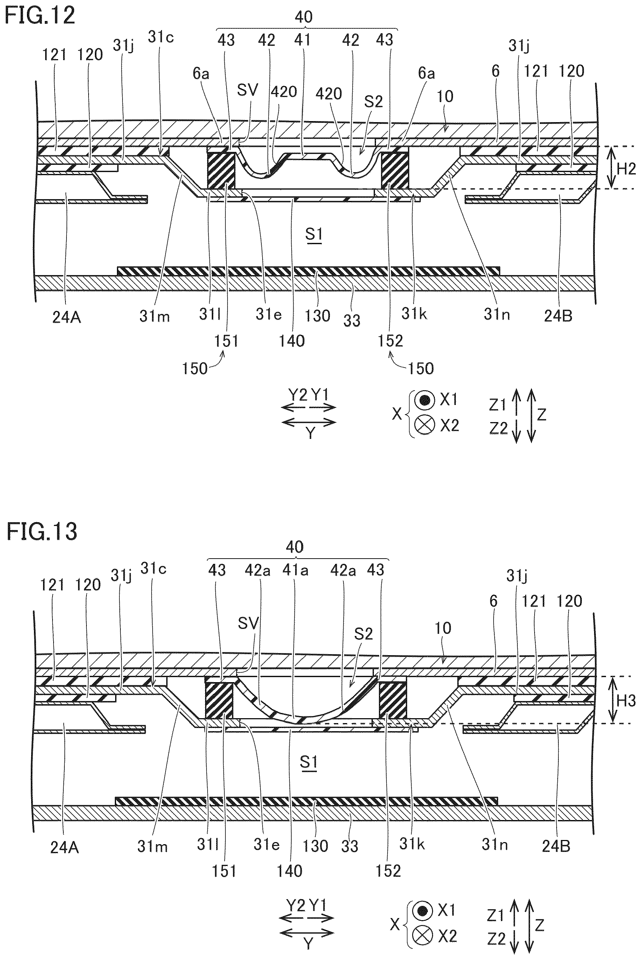

Fig. 12 is a partially enlarged view showing a configuration of protrusion 31k and its vicinity. Protrusion 31k includes a bottom plate 311 and side walls 31m, 31n. Each of side wall 31m and side wall 31n is formed to connect bottom plate 311 to bottom body 31j. Bottom plate 31l has smoke exhaust hole 31e.

Power storage device 100 includes a waterproof sheet 140. Waterproof sheet 140 is disposed on the lower surface of protrusion 31k and closes smoke exhaust hole 31e. Waterproof sheet 140 is formed to extend in the X direction and closes smoke exhaust holes 31e arranged in the X direction. Waterproof sheet 140 is an example of the "waterproof seal" in the present disclosure.

Herein, detection space formation member 40 is formed to be deformable from a reference shape to an inflated shape in which detection space formation member 40 is inflated downward relative to the reference shape, along with a pressure rise in detection space S2. The pressure in detection space S2 rises as gas is discharged from power storage cell 10. Fig. 12 shows detection space formation member 40 of the reference shape.

In detection space formation member 40 in the reference shape, a first part 41, a second part 42, and a third part 43 are formed. First part 41 is positioned so as to face safety valve SV. First part 41 extends horizontally along power storage cell 10.

Second part 42 is disposed adjacent to first part 41. Second part 42 is formed to be recessed (project) downward from each of first part 41 and third part 43. A groove portion 420 extending in the X direction is formed by second part 42. Thus, when detection space formation member 40 is in the reference shape, gas discharged from power storage cell 10 flows along groove portion 420. This allows gas to flow rapidly to smoke exhaust sensor 50 (Fig. 3). Second part 42 is connected to each of the Y1-side end and the Y2-side end of first part 41.

Third part 43 is in contact with lower surface 6 of power storage cell 10. In detection space formation member 40, third part 43 on the Y1 side and third part 43 on the Y2 side are provided. Third part 43 on the Y1 side is connected to the Y1-side end of second part 42 on the Y1 side. Third part 43 on the Y2 side is connected to the Y2-side end of second part 42 on the Y2 side. Third part 43 on each of the Y1 side and the Y2 side is connected (e.g., welded) to a part 6a of lower surface 6 which is adjacent to safety valve SV.

Power storage device 100 includes a waterproof adhesive material 150. Adhesive material 150 is disposed to surround smoke exhaust hole 31e between bottom plate 31c of lower case 31 (bottom plate 311 of protrusion 31k) and detection space formation member 40. Adhesive material 150 may be a seal member formed of, for example, non-adhesive rubber. Adhesive material 150 is an example of the "seal member" in the present disclosure.

Specifically, adhesive material 150 includes an adhesive material 151 and an adhesive material 152. Adhesive material 151 is provided on the Y2 side of smoke exhaust hole 31e. Adhesive material 152 is provided on the Y1 side of smoke exhaust hole 31e. Each of adhesive material 151 and adhesive material 152 is disposed on the upper surface of bottom plate 311 of protrusion 31k and is formed to extend in the X direction. Smoke exhaust holes 31e arranged in the X direction are sandwiched between adhesive material 151 and adhesive material 152 in the Y direction.

Adhesive material 151 supports third part 43 on the Y2 side from below. Adhesive material 152 supports third part 43 on the Y1 side from below. In other words, each of the two third parts 43 is sandwiched between adhesive material 150 (151, 152) and lower surface 6 of power storage cell 10.

Fig. 13 shows detection space formation member 40 deformed to be inflated. Detection space formation member 40 of the inflated shape includes a first part 41a, which is first part 41 of the reference shape after deformation, a second part 42a, which is second part 42 of the reference shape after deformation, and a third part 43.

In detection space formation member 40 of the inflated shape, first part 41a projects downward relative to second part 42a. A height H2 (Fig. 12) of detection space formation member 40 in the Z direction, which is in the reference shape, is smaller than a height H3 of detection space formation member 40 that is in the inflated shape.

The volume of detection space S2 when detection space formation member 40 is in the inflated shape is greater than the volume of detection space S2 when detection space formation member 40 is in the reference shape (Fig. 12). Consequently, the internal pressure of detection space S2 can be reduced by inflation of detection space formation member 40. This can suppress excessively rapid rupture of detection space formation member 40 due to a rise in the internal pressure of detection space S2. This allows gas to sufficiently flow through detection space S2 and gas to be detected more reliably by smoke exhaust sensor 50.

Detection space formation member 40 is in the reference shape when the internal pressure of detection space S2 is less than or equal to a prescribed reference value and deforms to be inflated when the internal pressure of detection space S2 exceeds the reference value. Detection space formation member 40 may deform from the inflated shape to the reference shape when the internal pressure of detection space S2 decreases from a value greater than the reference value to a value less than or equal to the reference value. The reference value is a value set in advance based on the experimental result in, for example, manufacture of power storage device 100.

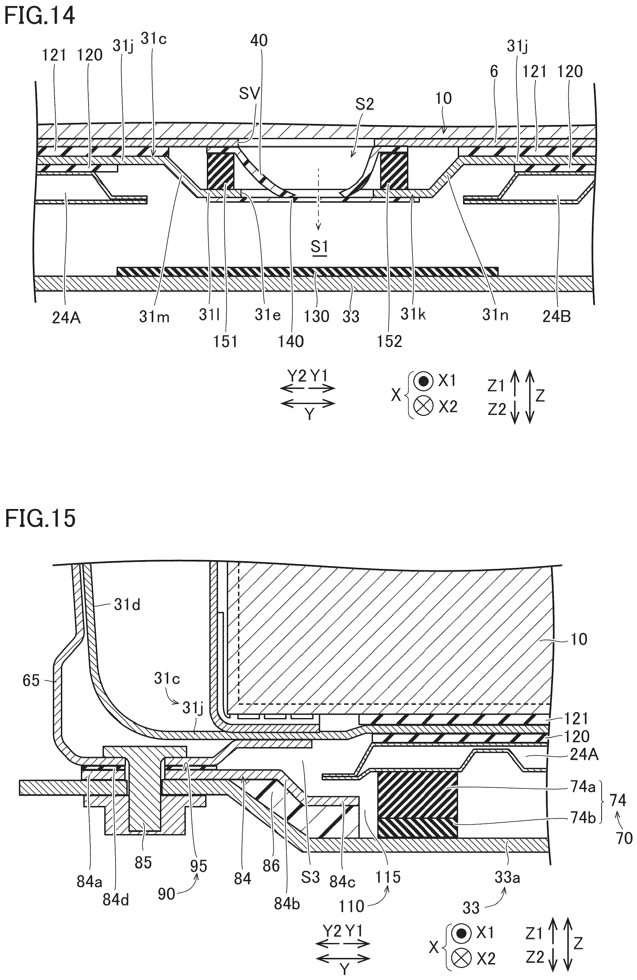

Fig. 14 shows detection space formation member 40 that is ruptured due to the heat of gas, blast, and the like. Thus, gas in detection space S2 flows into smoke exhaust space S1 through the ruptured portion of detection space formation member 40 and smoke exhaust hole 31e (see the alternate long and short dash line arrow).

Fig. 15 is a partially enlarged view of side collection portion 84 and its vicinity. As shown in Fig. 15, right side portion 74 of inner path defining portion 70 includes an elastic part 74a and an adhesive layer 74b. Elastic part 74a is formed of a material that elastically deforms, such as silicon. Elastic part 74a is in contact with the lower surface of cooler 20 (flow portion 24A in Fig. 15). Adhesive layer 74b bonds elastic part 74a to the upper surface of share panel 33.

Thus, since elastic part 74a is not bonded to cooler 20, a blast from power storage cell 10 may pass through between elastic part 74a and cooler 20. The blast that has passed through between elastic part 74a and cooler 20 is collected by side collection portion 84.

The position of contact of right side portion 74 is not limited to the lower surface of cooler 20. For example, when cooler 20 is not provided, inner path defining portion 70 may come into contact with the lower surface of bottom plate 31c of lower case 31.

Side bracket 65 is disposed over bottom plate 31c and peripheral wall 31d. Side bracket 65 is fixed to bottom plate 31c and peripheral wall 31d with a bolt (not shown), by welding, or by any other means.

Share panel 33 is fixed to side bracket 65 with a bolt 85. Side collection portion 84 is disposed between share panel 33 and side bracket 65. As share panel 33 comes into contact with side bracket 65 or side collection portion 84, lateral side portion 95 of outer path defining portion 90 is formed.

Side collection portion 84 is disposed in side passage 115 of exhaust passage 110. Side collection portion 84 includes a fixed portion 84a, an inclined portion 84b, and a protrusion 84c. Fixed portion 84a is disposed between share panel 33 and side bracket 65 and is fixed with a bolt 85.

Fixed portion 84a is bonded to side bracket 65 with an adhesive 84d. Fixed portion 84a is shaped to extend from between share panel 33 and side bracket 65 toward inner path defining portion 70.

Inclined portion 84b is provided at the tip of fixed portion 84a, and protrusion 84c is formed to extend in the upward-downward direction toward the center of right side portion 74.

As a result, a collection space S3 is formed between side collection portion 84 and lower case 31. In other words, a blast that has passed through between elastic part 74a and cooler 20 is collected in collection space S3. On the other hand, a filling portion 86 is charged between side collection portion 84 and share panel 33. Filling portion 86 is, for example, resin.

Although side bracket 65, side collection portion 84, and the like have been described, front bracket 61 (front collection portion 81), rear brackets 62 and 63 (rear collection portion 82), and side bracket 64 (side collection portion 83) are also formed similarly.

In power storage device 100 described above, detection space formation member 40 is provided to form detection space S2 between bottom plate 31c of lower case 31 and power storage cells 10 and to cause detection space S2 to be separated from smoke exhaust space S1. Thus, since detection space S2 is separated from smoke exhaust space S1, intrusion of moisture from smoke exhaust space S1 into detection space S2 can be suppressed. As a result, gas in detection space S2 can be detected with smoke exhaust sensor 50 that is not waterproofed. This can simplify the configuration of smoke exhaust sensor 50.

Detection space formation member 40 is formed to be deformable to the inflated shape so as to be inflated from the reference shape downward relative to the reference shape as the pressure in detection space S2 rises. Consequently, the sectional area of detection space S2 along the Y direction can be increased when the pressure in detection space S2 increases, thus allowing a smooth flow of gas in detection space S2.

### [Modifications]

The above embodiment has illustrated the example in which power storage cells 10 are arranged in the X direction, but the present disclosure is not limited thereto. For example, one power storage cell may be formed to extend in the X direction.

The above embodiment has illustrated the example in which each of waterproof sheet 140 and waterproof adhesive material 150 is provided in smoke exhaust hole 31e and in the vicinity of smoke exhaust hole 31e, but the present disclosure is not limited thereto. For example, only any one of waterproof sheet 140 and waterproof adhesive material 150 may be provided.

The above embodiment has illustrated the example in which detection space formation member 40 deforms as the internal pressure of detection space S2 rises, but the present disclosure is not limited thereto. A detection space formation member that does not deform along with a rise in the internal pressure of detection space S2 may be provided.

The above embodiment has illustrated the example in which heat-resistant plate 130 is provided below smoke exhaust hole 31e, but the present disclosure is not limited thereto. Heat-resistant plate 130 may not be provided below smoke exhaust hole 31e.

Although the present embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A power storage device (100) comprising:
at least one power storage cell (10) including a lower surface (6) on which a safety valve (SV) is provided;
a housing (30) that accommodates the at least one power storage cell;
a detection sensor (50) that detects gas discharged from the at least one power storage cell; and
a detection space formation member (40) that forms a detection space (S2) in which the gas is detected by the detection sensor, wherein
the housing includes
a lower case (31) disposed to cover the at least one power storage cell from below and including a bottom portion (31c) having a through hole (31e) positioned to overlap the safety valve, and
a share panel (33) disposed below the lower case and forming a smoke exhaust space (S1) between the bottom portion of the lower case and the share panel, and
the detection space formation member is provided to form the detection space between the bottom portion of the lower case and the at least one power storage cell and to cause the detection space to be separated from the smoke exhaust space.

2. The power storage device according to claim 1, wherein
the at least one power storage cell includes a plurality of power storage cells (10) arranged in an arrangement direction, and
the detection space formation member extends in the arrangement direction along the plurality of power storage cells.

3. The power storage device according to claim 1 or 2, further comprising a waterproof seal (140) that closes the through hole formed in the bottom portion of the lower case.

4. The power storage device according to claim 1 or 2, wherein the detection space formation member is formed to be deformable from a reference shape to an inflated shape in which the detection space formation member is inflated downward relative to the reference shape, along with a pressure rise in the detection space.

5. The power storage device according to claim 4, wherein in the detection space formation member in the reference shape, a first part (41) and a second part (42) are formed,
the first part being positioned to face the safety valve of the at least one power storage cell, and
the second part being disposed adjacent to the first part in an intersecting direction intersecting an upward-downward direction and formed to be recessed downward from the first part.

6. The power storage device according to claim 1 or 2, further comprising a waterproof seal member (150) disposed to surround the through hole between the bottom portion of the lower case and the detection space formation member.

7. The power storage device according to claim 1 or 2, further comprising a heat-resistant plate (130) disposed at a part of the share panel, the part facing the through hole formed in the bottom portion of the lower case.
